# EUROPÄISCHE PATENTSCHRIFT

(11) **EP 0 960 714 B1**
(45) Veröffentlichungstag und Bekanntmachung des Hinweises auf die Patenterteilung: **20.11.2002**
(21) Anmeldenummer: 99202899.3
(22) Anmeldetag: 05.02.1997
(51) Int. Cl.: B29C 45/27

(54) **Heisskanal-Spritzwerkzeug**
Hot runner injection mould
Moule d'injection à canal chauffé

(30) Priorität: 14.10.1996 CH 250496
(43) Veröffentlichungstag der Anmeldung: 01.12.1999
(62) Teilanmeldung aus: 97900928.9
(73) Patentinhaber: SCHÖTTLI AG, 8253 Diessenhofen (CH)
(72) Erfinder: Manz, Willi, 8460 Marthalen (CH)
(74) Vertreter: Gachnang, Hans Rudolf

(56) Entgegenhaltungen:
- FR-A- 1 188 316
- GB-A- 243 514
- GB-A- 1 535 164
- US-A- 2 354 363
- US-A- 3 790 324
- PATENT ABSTRACTS OF JAPAN vol. 018, no. 666 (M-1724), 15. Dezember 1994 (1994-12-15) & JP 06 262650 A (SADAO SHIMIZU), 20. September 1994 (1994-09-20)
- PATENT ABSTRACTS OF JAPAN vol. 009, no. 333 (M-443), 27. Dezember 1985 (1985-12-27) & JP 60 165462 A (HITACHI DENSEN KK), 28. August 1985 (1985-08-28)

## Beschreibung

Die vorliegende Erfindung betrifft ein Heisskanal-Spritzwerkzeug gemäss Oberbegriff des Patentanspruches 1.

Bei einem herkömmlichen Heisskanal-Spritzwerkzeug wie es beispielsweise aus der US-A 3,790,324 bekannt ist, wird der von der Zuführschnecke der Spritzmaschine herangeführte flüssige Kunststoff in einen beheizten Verteilblock auf die beabstandet an einer Seitenfläche desselben angeordneten Einspritzdüsen geführt. Die Verteilleitungen innerhalb des Verteilblockes liegen rechtwinklig zueinander verlaufend. Die Herstellung eines solchen Verteilblockes mit rechtwinklig verlaufenden Verteilleitungen ist sehr aufwendig, und an den rechtwinkligen Umlenkungen der Leitungen entstehen trotz aufwendiger Bearbeitungsweise Abrisskanten, die zum einen das darin geförderte Kunststoffmaterial beschädigen und an denen sich Ablagerungen festsetzen können. Im weiteren ist die Beheizung des bekannten Verteilblocks sehr aufwendig, weil die Wärme von einer ausserhalb des Werkzeugs angeordneten Heizvorrichtung, die die Heizflüssigkeit erwärmt, durch Leitungen in den die Verteilleitungen aufnehmenden Hohlraum und aus diesem wieder hinaus geführt werden muss.

Aufgabe der vorliegenden Erfindung ist die Schaffung einer Heizeinrichtung für ein Heisskanal-Spritzwerkzeug, das einen Hohlraum mit darin verlaufenden Kunststoff-Verteilleitungen aufweist, welche Heizeinrichtung unkompliziert ein- und ausbaubar ist und eine gleichmässige Erwärmung des Kunststoffs in den Verteilleitungen ermöglicht.

Gelöst wird diese Aufgabe durch ein Heisskanal-Spritzwerkzeug mit einer Heisskanaldüse mit den Merkmalen des Patentanspruches 1. Vorteilhafte Ausgestaltungen der Erfindung sind in den abhängigen Ansprüchen definiert.

Die vom Heizelement unterhalb den Verteilleitungen direkt an die im Hohlraum vorhandene Flüssigkeit zugeführte Wärme ermöglicht eine optimale Temperatursteuerung. Durch Konvektion kann die örtlich vom Heizelement stärker erwärmte Flüssigkeit um die Verteilleitungen herum und insbesondere in die Kontaktbereiche mit der Heisskanalplatte und mit der Bodenplatte geleitet werden. Eine besonders optimale Verteilung der zugeführten Wärmemenge entlang der Verteilleitungen kann zusätzlich durch Leitmittel bewirkt werden.
Die Verteilrohre lassen sich - da frei durch den Hohlraum verlaufend eingelegt - mit optimalen Biegeradien herstellen, und deren Länge kann, falls erwünscht, für alle Rohre unabhängig vom Abstand der Eintrittsstelle des Kunststoffs in den Kanalblock identisch ausgeführt sein.
Dies ergibt eine gleich lange Verweilzeit des Kunststoffes innerhalb der Verteilrohre und folglich an allen Einspritzdüsen gleiche Bedingungen.

Anhand illustrierter Ausführungsbeispiele wird die Erfindung näher erläutert. Es zeigen:
- Figur 1: einen Querschnitt durch ein Heisskanal-Spritzwerkzeug mit vier vertikal übereinanderliegenden Einspritzdüsen,
- Figur 2: einen Querschnitt längs Linie II-II durch den Verteilblock in Figur 1,
- Figur 3: einen Querschnitt durch eine weitere Ausgestaltung der Erfindung längs Linie III-III in Figur 4 mit vier übereinanderliegenden Einspritzdüsen,
- Figur 4: einen Querschnitt längs Linie IV-IV in Figur 3.

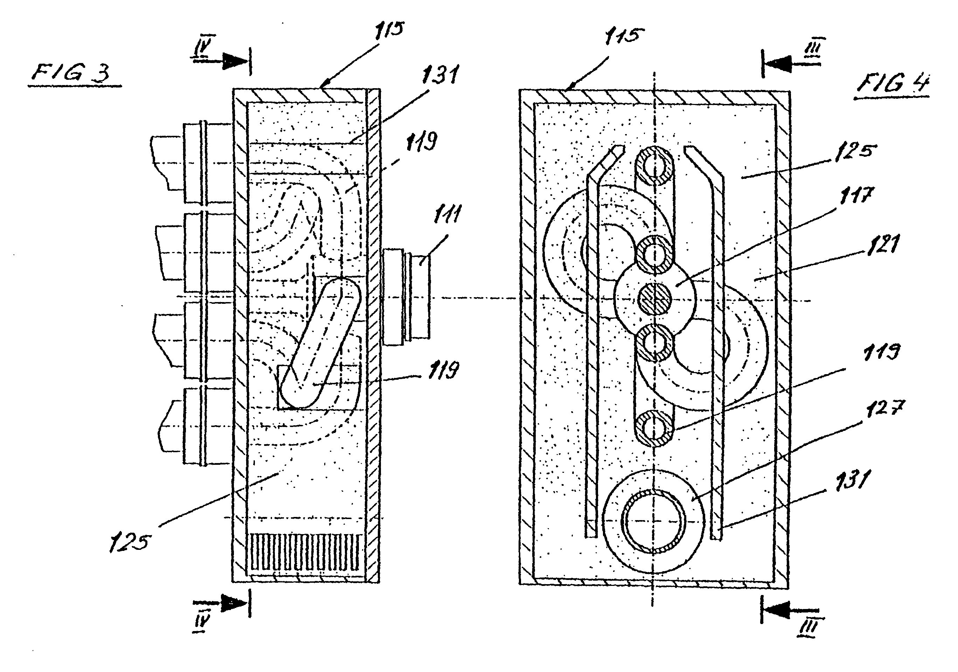

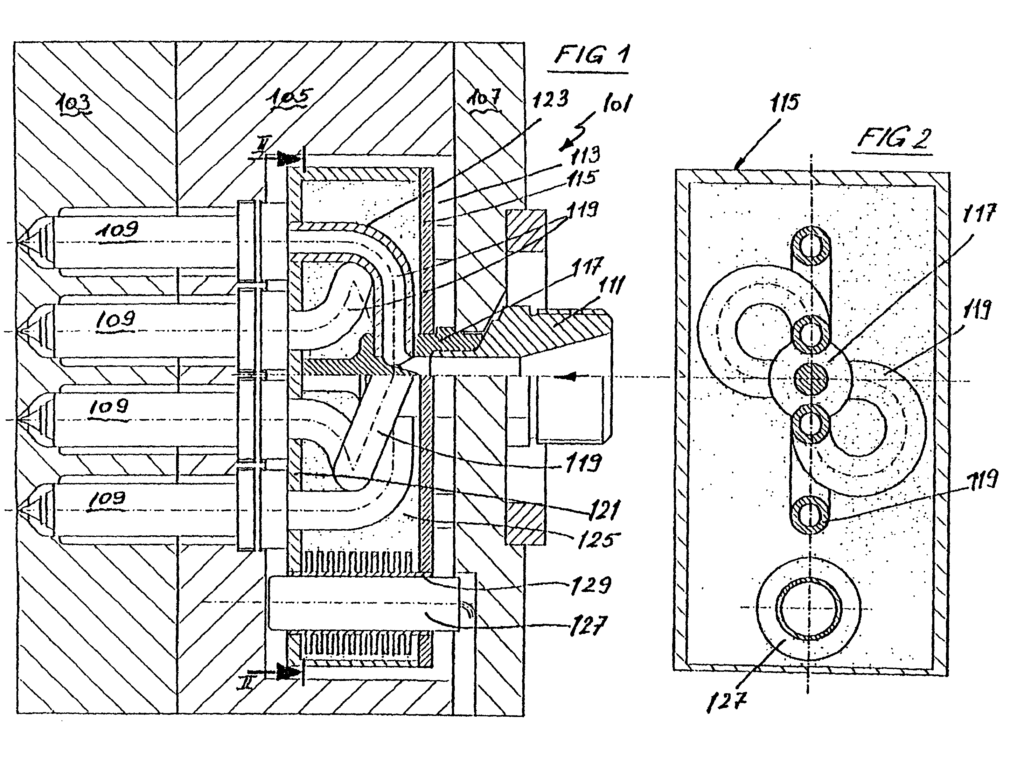

In Figur 1 ist ein Heisskanal-Spritzwerkzeug sichtbar, das drei Werkzeugblöcke umfasst, nämlich die Bodenplatte 103, die Hotrunnerplatte 105 und eine Deckplatte 107. In der Bodenplatte 103 sind vier Einspritzdüsen 109 eingesetzt, die vertikal direkt übereinander liegen. In der Deckplatte 107 ist eine Ausgussbüchse 117 eingesetzt, in der sich die Austrittsöffnung für das verflüssigte Kunststoffmaterial befindet, welches beispielsweise von einer Schnecke an das Heisskanal-Spritzwerkzeug 101 herangeführt und in dieses eingeführt wird. Die Hotrunnerplatte 105 weist eine Ausnehmung 113 auf, in welcher in den dargestellten Ausführungsbeispielen ein Hohlkörper 115 eingesetzt. Im Hohlkörper 115 oder in der Ausnehmung 113 ist eine Ausgussbüchse 117 zum Einführen der flüssigen Kunststoffmasse eingesetzt. Von dieser wird der flüssige Kunststoff über Verteilleitungen 119 auf die Einspritzdüsen 109 verteilt. Die Verteilleitungen 119 enden in der Seitenwand 121 des Hohlkörpers 115 und sind mit letzterer dicht verbunden, z.B. hartgelötet, verschweisst oder dergleichen. Die rohrförmigen Verteilleitungen 119 weisen zwischen der Verbindungsstelle A mit der Ausgussbüchse 117 und ihrem Ende in der Wand 121 Bogenbereiche 123 auf, deren Biegeradius den von den Raumverhältnissen gegebenen grösstmöglichen Wert aufweist. Die beiden zu den zuoberst und zuunterst liegenden Einspritzdüsen 109 führenden Leitungen 119 weisen in den Figuren 4 und 5 einen in einer Ebene liegenden Verlauf mit einem 90'-Bogen auf. Die beiden anderen Verteilleitungen 119, die zu den beiden dazwischenliegenden Einspritzdüsen 109 führen, treten vorerst horizontal aus der Ausgussbüchse 117 aus und führen in einem räumlichen Verlauf zu den Einspritzdüsen 109 (vgl. insbes. Figur 2).

Im Hohlraum 125 des Hohlkörpers 115 oder darunter ist weiter eine Heizung, z.B. eine Heizpatrone, kurz Heizelement 127, eingesetzt. Vorzugsweise liegt die Heizpatrone 127 geschützt in einem Rohr 129, das auf beiden Seiten offen ist und das Auswechseln der Heizpatrone 127 erlaubt, ohne den Hohlkörper 115 öffnen zu müssen. Dieser ist mit einem wärmeleitenden Medium, z.B. einer Flüssigkeit, wie öl oder einem Gas, vollständig gefüllt. Das Medium umgibt die sich im Hohlraum 125 befindenden Verteilleitungen 119 und auch die Ausgussbüchse 117.

Im folgenden wird die Funktionsweise der Beheizung der Verteilleitungen 119 in der Hotrunnerplatte 105 erläutert. Die von der Heizung unterhalb der Verteilleitungen 119 erzeugte Wärme im Innern des Hohlkörpers 115 wird an das wärmeleitende Medium übertragen, und durch Konvektion beginnt eine Umwälzung und damit gleichmässige Bestreichung sämtlicher Oberflächen der im wärmeleitenden Medium liegenden Verteilleitungen 119. Die Umwälzung des Mediums bewirkt eine ausgeglichene Wärmeübertragung vom Medium an die Verteilleitungen 119 und das darin geführte Kunststoffmaterial. Eine örtliche Überhitzung, z.B. im Bereich des dem Heizelement 127 am nächsten liegenden Verteilrohres 119, ist ausgeschlossen. Alternativ zur Umwälzung des Mediums durch Konvektion kann bei sehr grossen Werkzeugen eine Umwälzung mit einer Pumpe erfolgen (keine Abb.).

In einer weiteren vorteilhaften Ausgestaltung gemäss den Figuren 3 und 4 sind im Hohlraum 125 des Hohlkörpers 115 seitlich der Verteilleitungen 119 Leitbleche 131 eingesetzt, welche das durch das Heizelement 127 erwärmte Medium innerhalb eines schmalen Kanals 133 entlang den übereinanderliegenden Verteilleitungen 119 nach oben führen und das dadurch oben abgekühlte und deshalb spezifisch schwerere Medium ausserhalb der Leitbleche 131 nach unten absinken lassen, wo es am Heizelement 127 erneut erwärmt wird. Um den durch die Leitbleche 131 gebildeten vertikalen Kanal möglichst schmal zu halten, durchdringen die schlaufenförmigen Abschnitte der Verteilleitungen 119 die Leitbleche 131.

## Patentansprüche

1. Heisskanal-Spritzwerkzeug (101), umfassend eine Hotrunnerplatte (105) mit einem Hohlraum (125) mit einem wärmeleitenden flüssigen oder gasförmigem Medium und mit einer Heizung, in welcher Hotrunnerplatte (105) mindestens eine Verteilleitung (119) das flüssige Kunststoffmaterial von der Ausgussbüchse (117) zu der mindestens einen Einspritzdüse (109) führt, wobei im Hohlraum (125) des Hohlkörpers (115) die mindestens eine Verteilleitung (119) von einer zentralen Verteilleitung, die in den Hohlraum (125) mündet, zu der mindestens einen beabstandet angeordneten Einspritzdüse (109) geführt wird, **dadurch gekennzeichnet, dass** die Heizung als Heizelement (127) ausgebildet und unterhalb der mindestens einen Verteilleitung (119) angeordnet ist, und dass das Heizelement (127) in einem Rohr (129) innerhalb oder ausserhalb an der Unterseite des Hohlraums (115) eingesetzt und von aussen auswechselbar ist.

2. Heisskanal-Spritzwerkzeug nach Anspruch 1, **dadurch gekennzeichnet, dass** mehrere Verteilleitungen (119) gleicher Länge innerhalb des Hohlraumes (125) angeordnet sind und aus knickfrei gebogenen Rohren bestehen.

3. Heisskanal-Spritzwerkzeug nach einem der Ansprüche 1 oder 2, **dadurch gekennzeichnet, dass** das Heizelement (127) im Bereich des Bodens des Hohlraumes (125) eingesetzt ist.

4. Heisskanal-Spritzwerkzeug nach einem der Ansprüche 1 bis 3, **dadurch gekennzeichnet, dass** im Hohlraum (125) seitlich der Verteilleitungen (119) Leitbleche (131) angeordnet sind.

5. Heieskanal-Spritzwerkzeug nach einem der Ansprüche 3 und 4, **dadurch gekennzeichnet, dass** die wärmeleitende Flüssigkeit durch Konvektion oder durch eine Pumpe innerhalb des Hohlraums (125) umgewälzt wird.

## Claims

1. Hot-channel injection moulding tool (101), including a hot-runner plate (105) with a cavity (125) containing a heat-conducting, liquid or gaseous medium and a heater, in which hot-runner plate (105) at least one distribution conduit (119) guides the liquid plastics material from the discharge bush (117) to at least one injection nozzle (109), the at least one distribution conduit (119) extending in the cavity (125) of the hollow body (115) from a central distribution conduit, which terminates in the cavity (125), to the at least one spaced-apart injection nozzle (109), **characterised in that** the heater is in the form of heating element (127) and is disposed beneath the at least one distribution conduit (119), and **in that** the heating element (127) is inserted in a pipe (129) internally or externally on the underside of the cavity (115) and is replaceable from outside.

2. Hot-channel injection moulding tool according to claim 1, **characterised in that** a plurality of distribution conduits (119) of identical length are disposed internally of the cavity (125) and comprise pipes which have been curved in a kink-free manner.

3. Hot-channel injection moulding tool according to one of claims 1 or 2, **characterised in that** the heating element (127) is inserted in the region of the base of the cavity (125).

4. Hot-channel injection moulding tool according to one of claims 1 to 3, **characterised in that** baffle plates (131) are disposed in the cavity (125) laterally of the distribution conduits (119).

5. Hot-channel injection moulding tool according to one of claims 3 and 4, **characterised in that** the heat-conducting liquid is circulated within the cavity (125) by convection or by a pump.

## Revendications

1. Moule à injection à canal chauffant (101), comprenant une plaque à canal chauffant (105) dotée d'une cavité (125) renfermant un produit liquide ou gazeux conduisant la chaleur et un dispositif de chauffage, plaque à canal chauffant (105) dans laquelle au moins un tuyau distributeur (119) amène la matière plastique liquide du bec de coulée (117) à au moins une buse d'injection (109), sachant que dans la cavité (125) du corps creux (115), au moins le tuyau distributeur (119) part d'un tuyau distributeur central débouchant dans la cavité (125) pour déboucher au niveau d'au moins une buse d'injection (109) distante, **caractérisé en ce que** le chauffage est réalisé sous forme d'élément chauffant (127) et est situé sous le tuyau distributeur (119) qui est au moins prévu, et **en ce que** l'élément chauffant (127) est logé dans un tube (129) placé à l'intérieur ou à l'extérieur au bas de la cavité (125) et peut être remplacé de l'extérieur.

2. Moule à injection à canal chauffant selon la revendication 1, **caractérisé en ce que** plusieurs tuyaux distributeurs (119) de même longueur sont disposés à l'intérieur de la cavité (125) et sont constitués de tubes coudés sans angles vifs.

3. Moule à injection à canal chauffant selon la revendication 1 ou 2, **caractérisé en ce que** l'élément chauffant (127) est situé dans la zone du fond de la cavité (125).

4. Moule à injection à canal chauffant selon l'une des revendications 1 à 3, **caractérisé en ce que** des tôles de guidage (131) sont placées dans la cavité (125) à côté des tuyaux distributeurs (119).

5. Moule à injection à canal chauffant selon la revendication 3 ou 4, **caractérisé en ce que** l'on fait circuler le liquide conduisant la chaleur par convection ou à l'aide d'une pompe située à l'intérieur de la cavité (125).
